# EUROPEAN PATENT SPECIFICATION

(11) **EP 3 663 483 B1**
(45) Date of publication and mention of the grant of the patent: **25.01.2023**
(21) Application number: 18210069.3
(22) Date of filing: 04.12.2018
(51) Int. Cl.: E04G 9/10, G01L 19/14, E04B 2/86

(54) **SENSOR UNIT AND LOST FORMWORK FOR CONCRETE CONSTRUCTION**
SENSOREINHEIT UND VERLORENE SCHALUNG FÜR BETONKONSTRUKTION
UNITÉ DE CAPTEUR ET COFFRAGE A USAGE UNIQUE POUR CONSTRUCTION EN BÉTON

(43) Date of publication of application: 10.06.2020
(73) Proprietor: PERI SE, 89264 Weißenhorn (DE)
(72) Inventor: Järleberg, Mikael, 457 50 Bullaren (SE)
(74) Representative: K & H Bonapat Patentanwälte Koch · von Behren & Partner mbB

(56) References cited:
- EP-A1- 3 404 205
- DE-A1- 10 250 750
- DE-U1- 8 814 208
- JP-A- 2014 031 621
- JP-B2- 2 852 734

## Description

### Background

The present invention relates to a sensor unit. Furthermore, the present invention relates to a lost formwork for concrete construction comprising the sensor unit.

Lost formwork in the context of concrete construction is a semi-prefabricated concrete element consisting of two reinforced concrete walls. The two walls are held together with reinforcement rods creating a void in between them. The individual walls are cast against a steel form in the factory creating a very fine surface that needs little or no additional work before adding the finishing layer of paint or wall-paper.

The formwork walls are transported to the construction side by lorry and are then hoisted into place with the use of a crane. They are secured in an upright position using props and struts and additional reinforcement is added in the joints between the individual elements. Concrete is then poured from the top to fill the void between adjacent formwork walls creating a solid concrete wall.

A limiting factor when it comes to the speed of pour and the amount of concrete to fill in one pour is the lateral concrete pressure exerted between the formwork walls. Concrete does not work like an ideal fluid when it comes to exerted lateral pressure. The lower the rate of pour, measured in meters versus time, the lower the exerted lateral pressure.

The rate of pour must be kept low enough in order to not exceed the maximum concrete pressure defined by the manufacturer of the formwork wall. Since the actual concrete pressure is normally not known the void enclosed by the formwork walls is filled very slowly and many times not all the way up so as to not exceed the maximum design pressure of the formwork walls.

US 2004/0244321 A1 discloses an elongated building element to form a series of walls. The elements each have longitudinally extending flanges that snap engage with longitudinally extending grooves in the next adjacent element. Accordingly, the wall is constructed by joining the elements in a direction transverse their general direction of extension. If so required the elements may be filled with concrete.

Further, documents EP 3 404 205 A1 and DE 88 14 208 U1 offer a pressure sensor which is secured into a flange element by means of a clamp fastening. The flange element is first secured to the outer surface of the concrete wall and it so provides the connecting means for attaching the sensor to the wall. Document EP 3404205 discloses the features of the preamble of claim 1.

Document DE 102 50 750 A1 in turn shows an arrangement for a humidity sensor device to be fixed to a concrete wall.

Consequently, there is a need to further improve the process of adjusting a speed of pouring concrete. If the concrete worker can get information on the actual concrete pressure while pouring the rate of pour can be held at a maximum while still maintaining the lateral pressure below the maximum design pressure of the formwork walls. This would save time and increase the safety on the construction side.

### Disclosure of the invention

The present invention relates to a sensor unit insertable into an opening of a formwork wall of lost formwork for building material construction in accordance with claim 1. Furthermore, the present invention relates to a lost formwork for concrete construction comprising the sensor unit of the present invention in accordance with claim 11.

Further embodiments of the present invention are subject of the further sub-claims and of the following description, referring to the drawings.

An aspect of the present invention relates to a sensor unit insertable into an opening of a formwork wall of lost formwork for building material construction, said sensor unit being configured to measure a lateral pressure exerted on formwork walls by building material filled into a space enclosed by the formwork walls, comprising a pressure chamber, a pressure transducer connected to the pressure chamber, a control unit configured to control the pressure transducer and an arrangement for fastening and releasing the sensor unit in the opening of the formwork wall, comprising an expansion member and an actuating device adapted to actuate the expansion member, wherein the expansion member, in an actuated state, is adapted to fasten the sensor unit in the opening of the formwork wall, and wherein the expansion member, in a non-actuated state, is adapted to release the sensor unit from its fastening in the opening of the formwork wall.

A further aspect of the present invention relates to a lost formwork for concrete construction comprising a first formwork wall and a second formwork wall aligned in parallel and connected to each other by a plurality of reinforcement rods, and at least one sensor unit according to the present invention configured to acquire data in relation to a lateral pressure exerted on the formwork walls by building material being filled in a space enclosed by the formwork walls.

The idea of the present invention is to measure the concrete pressure while pouring the concrete. This information enables a fast pour and saves time on the construction site. It is also very easy to install the sensor unit of the present invention since it does not need any fasteners to be mounted in the concrete wall. All that is needed is a hole into which the sensor unit can be inserted inside one of the formwork walls.

The hole can either be drilled on site or prepared while manufacturing the formwork wall at the factory. Due to the provision of the arrangement for fastening and releasing the sensor unit that is built into the sensor unit comprising the expansion member and the actuating device adapted to actuate the expansion member, a secure and easy to handle sensor unit is advantageously provided that enables quick and easy installation into the formwork wall of the lost formwork.

According to the invention, the actuating device comprises at least one lever arm, an end portion of which is pivot mounted to a first plate, wherein the end portion has a substantially rectangular shape with first opposite sides having a first length and second opposite sides having a second length greater than the first length.

When tilting the pivot arms around their pivot axis the orientation of the rectangle-shaped end portion of the lever arm can thus advantageously be changed.

According to a further embodiment, the actuating device further comprises a second plate, said second plate having an opening through which the pressure chamber extends, wherein the second plate forms a support surface for the end portion of the at least one lever arm.

Thus, when tilting the lever arm around its pivot axis the second plate advantageously forms the support surface for the end portion of the at least one lever arm consequently moving the first plate due to the rectangle-shaped end portion of the lever arm having different lengths according to how the lever arm is oriented. According to a further embodiment, the at least one lever arm, in a non-actuated position, is oriented substantially in parallel to a longitudinal axis of the pressure chamber, and in an actuated position, is oriented substantially perpendicular to the longitudinal axis of the pressure chamber. The at least one lever arm can thus advantageously be tilted by an angle of 90° from the non-actuated position to the actuated position.

According to a further embodiment, in the non-actuated position, the second opposite sides of the end portion of the at least one lever arm are oriented in parallel to the first plate and the second plate, and wherein in the actuated position, the first opposite sides of the end portion of the at least one lever arm are oriented in parallel to the first plate and the second plate.

Thus, when the orientation of the first opposite sides and the second sides of the end portion of the lever arm changes in response to the tilting of the lever arm, their orientation with respect to the first plate and the second plate thus also changes.

Therefore, by tilting the lever, a distance between the first plate and the second plate can be changed.

According to the invention, the expansion member is formed by a substantially cylindrical rubber element fitted around the substantially cylindrical pressure chamber. Due to the material choice, the expansion member can advantageously be elastically deformed and thereafter assume its original shape.

According to a further embodiment, the expansion member is arranged between the second plate and a ring-shaped element having, at least in portions, an equal diameter than the expansion member. The expansion member is thus advantageously sandwiched between the second plate and the ring-shaped element in a securely held position.

According to the invention, in the non-actuated position of the at least one lever arm, the expansion member is in the non-actuated state, and wherein in the actuated position of the at least one lever arm, the end portion of the actuating device is adapted to move the first plate in an axial direction, thereby exerting an axial force on the expansion member causing the expansion member to expand in a radial direction.

In doing so, the sensor unit can advantageously be fastened within the opening of the formwork wall. According to a further embodiment, at least some of the sides of the end portion of the at least one lever arm have rounded edges, and wherein the first plate has an opening through which the pressure chamber extends. The provision of the end portion with rounded edges enables advantageously a frictionless actuation of the lever arm with respect to the first plate and the second plate. According to a further embodiment, the actuating device comprises a first lever arm and a second lever arm that are arranged opposite to each other, wherein each lever arm has a U-shape having two end portions pivot mounted to the first plate, wherein the end portions have a substantially rectangular shape with first opposite sides having a first length and second opposite sides having a second length greater than the first length.

By providing two separate lever arms, the force exerted by the lever arms on the first plate in order to compress the expansion member is thus advantageously symmetrical with respect to the longitudinal axis of the pressure chamber, thus creating a balanced force.

According to a further embodiment, the sensor unit further comprises a bushing inserted between the pressure chamber and the expansion member, and wherein the ring-shaped element has a stepped shape comprising a first axial portion arranged adjacent to the expansion element having a first diameter and a second axial portion having a second diameter less than the first diameter, wherein a sealing ring is arranged at a collar of the ring-shaped element.

The provision of the bushing advantageously enables that the pressure chamber does not come into contact with the first plate and the second plate, thus preventing abrasion of the surface of the first plate, the second plate and the pressure chamber.

According to a further embodiment, the sensor unit further comprises a membrane arranged adjacent to the ring-shaped element, and wherein a nose ring fastens the membrane to the ring-shaped element by means of a threaded connection.

The membrane can thus be securely held in position while the sensor unit is sealed from the pressure side of the formwork wall.

According to a further embodiment, the control unit is fixed to the second plate by a pair of screws, wherein each screw is guided through a hollow spacer element arranged between a wing flange of the control unit and the second plate. The spacer elements advantageously function to secure the control unit to the second plate ensuring its stability while providing the advantage of inserting screws into the spacer elements with which the control unit can be attached to the second plate.

The herein described features of the sensor unit are also disclosed in the lost formwork for concrete construction comprising said sensor unit.

### Brief description of the figures

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
- Fig. 1: shows a schematic view of a lost formwork for concrete construction comprising a sensor unit according to a preferred embodiment of the invention;
- Fig. 2: shows an exploded view of the sensor unit according to the preferred embodiment of the invention;
- Fig. 3a: shows a schematic view of the sensor unit in a non-actuated position according to the preferred embodiment of the invention;
- Fig. 3b: shows a schematic view of the sensor unit in an actuated position according to the preferred embodiment of the invention;
- Fig. 4a: shows a schematic view of the sensor unit in an actuated position according to the preferred embodiment of the invention; and
- Fig. 4b: shows a schematic view of the sensor unit in a non-actuated position according to the preferred embodiment of the invention;

Unless indicated otherwise, like reference numerals or signs to the figures indicate like elements.

### Detailed description of the embodiments

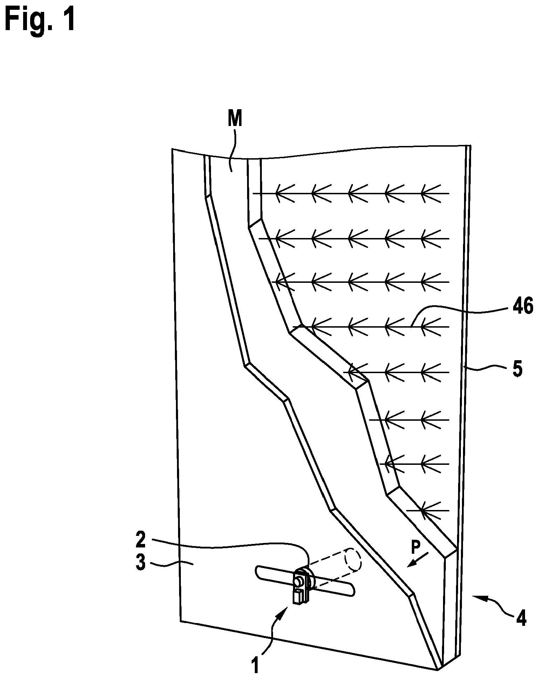

Fig. 1 shows a schematic view of a lost formwork for concrete construction comprising a sensor unit according to a preferred embodiment of the invention.

The sensor unit 1 is insertable into an opening 2 of a formwork wall 3 of a lost formwork 4 for building material M construction. The sensor unit 1 is configured to measure a lateral pressure P exerted on the formwork walls 3, 5 by building material M filled into a space enclosed by the formwork walls 3, 5.

The formwork walls 3, 5 are aligned in parallel and connected to each other by a plurality of reinforcement rods 46. The sensor unit 1 will be described in more detail in the following figures.

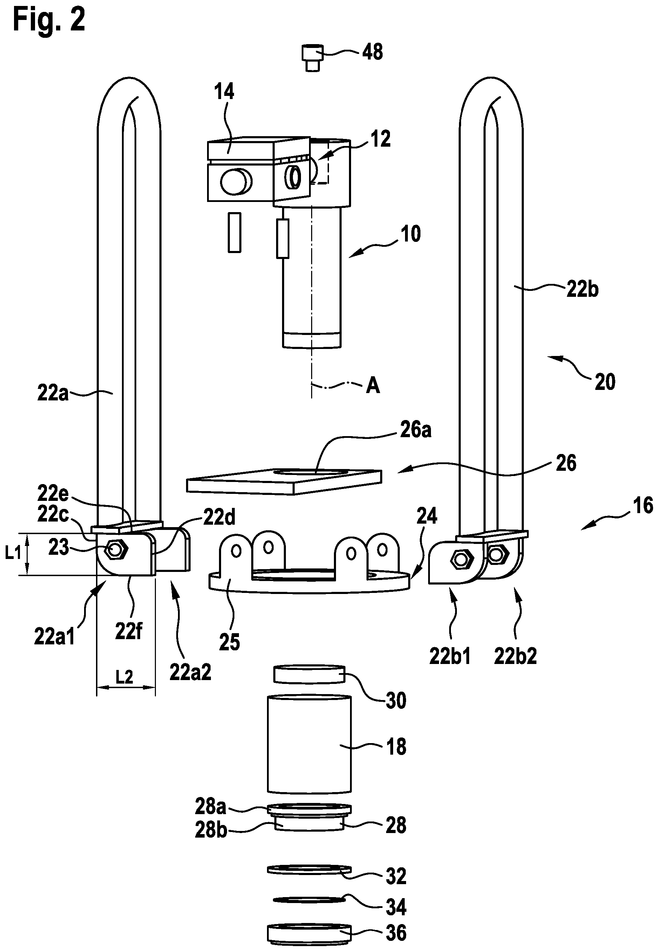

Fig. 2 shows an exploded view of the sensor unit according to the preferred embodiment of the invention.

The sensor unit 1 comprises a pressure chamber 10, a pressure transducer 12 connected to the pressure chamber 10, a control unit 14 configured to control the pressure transducer 12 and an arrangement 16 for fastening and releasing the sensor unit 1 in the opening 2 of the formwork wall 3.

The sensor unit 1 may be embodied by different kinds of pressure sensors available on the market as is known to a person skilled in the art. In the present example, the sensor unit comprises the pressure chamber filled with a fluid enclosed by a membrane attached to an end portion of the pressure chamber such that when said membrane is exposed to building material being filled in the space between adjacent formwork walls said membrane is moved, thus generating a pressure of the fluid inside the pressure chamber.

The pressure transducer 12 in turn then converts a measured fluid pressure in the pressure chamber 10 into an electrical signal as is known in the art.

The arrangement 16 for fastening and releasing the sensor unit 1 in the opening 2 of the formwork wall 3 comprises an expansion member 18 and an actuating device 20 adapted to actuate the expansion member 18.

The expansion member 18 in an actuated state is adapted to fasten the sensor unit in the opening (not shown in Fig. 2) of the formwork wall, and wherein the expansion member, in a non-actuated state, is adapted to release the sensor unit from its fastening in the opening of the formwork wall.

The actuating device 20 comprises a first lever arm 22a, and a second lever arm 22b. Referring to the first lever arm 22a, said first lever arm 22a comprises an end portion 22a1, 22a2 which is pivot mounted to a first plate 24.

The end portion 22a1, 22a2 has a substantially rectangular shape with first opposite sides 22c, 22d having a first length L1 and second opposite sides 22e, 22f having a second length L2 which is greater than the first length L1.

The second lever arm 22b has an analogous construction as the first lever arm 22a and is arranged symmetrically to the first lever arm 22a with respect to a central axis of the first plate 24.

The actuating device 20 further comprises a second plate 26. The second plate 26 has an opening 26a through which the pressure chamber 10 extends. The second plate 26 forms a support surface for the end portion 22a1, 22a2 of the first lever arm and also forms a support surface for the end portion 22b1, 22b2 of the second lever arm 22b.

Furthermore, the expansion member 18 is arranged between the second plate 26 and a ring-shaped element 28 having, at least in portions, an equal diameter than the expansion member 18.

At least some of the sides, in the present embodiments three sides, of the end portions 22a1, 22a2 of the first lever arm and the respective end portions 22b1, 22b2 of the second lever arm have rounded edges. Moreover, the first plate 24 has an opening 24a through which the pressure chamber extends.

The first lever arm 22a and the second lever arm 22b are furthermore arranged opposite to each other. Each lever arm 22a, 22b has a U-shape having two end portions that are pivot mounted to the first plate 24.

The sensor unit 1 further comprises a bushing 30 inserted between the pressure chamber 10 and the expansion member 18. The ring-shaped element 28 has a stepped shape comprising a first axial portion 28a arranged adjacent to the expansion element having a first diameter D1 and a second axial portion 28b having a second diameter D2 less than the first diameter D1, wherein a sealing ring 32 is arranged at a collar 30 of the ring-shaped element 28.

The sensor unit 1 furthermore comprises the membrane 34 arranged adjacent to the ring-shaped element 28. Moreover, a nose ring 36 fastens the membrane 34 to the ring-shaped element 28 by means of a threaded connection.

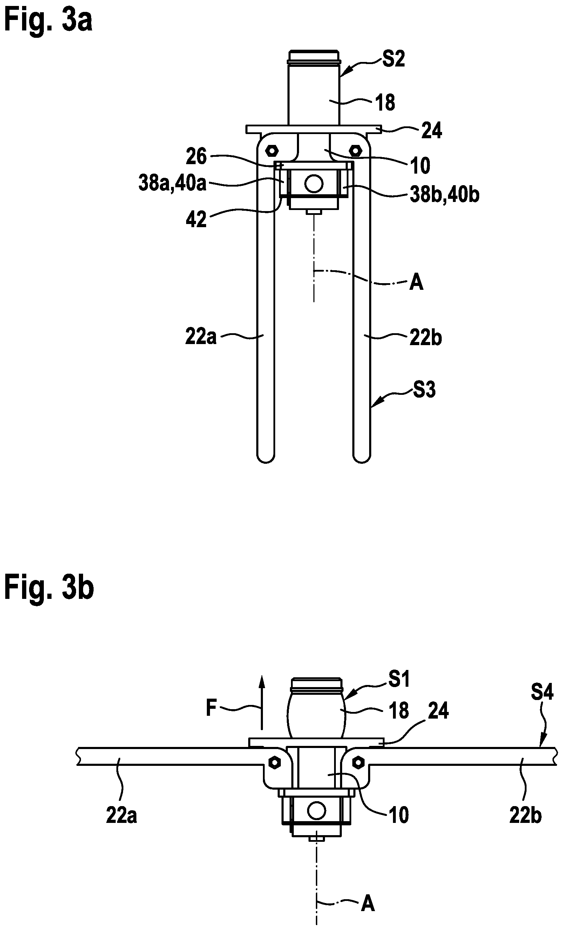

Fig. 3a shows a schematic view of the sensor unit in a non-actuated position according to the preferred embodiment of the invention.

Fig. 3a shows the first lever arm 22a and the second lever arm 22b in a non-actuated position S3. In said non-actuated position S3, the first lever arm 22a and the second lever arm 22b are oriented substantially in parallel to the longitudinal axis A of the pressure chamber 10.

Moreover, in the depicted non-actuated position, the second opposite sides of the end portion of the lever arms are oriented in parallel to the first plate 24 and the second plate 26.

The expansion member 18 is formed by a substantially cylindrical rubber element fitted around the substantially cylindrical pressure chamber 10.

Moreover, in the depicted non-actuated position S3 of the lever arms 22a, 22b, the expansion member 18 is in the non-actuated state S2.

Fig. 3b shows a schematic view of the sensor unit in an actuated position according to the preferred embodiment of the invention.

In said depiction, the first lever arm 22a and the second lever arm 22b are shown in the actuated position S4. In said actuated position S4, the first lever arm 22a and the second lever arm 22b are oriented substantially perpendicular to the longitudinal axis A of the pressure chamber 10.

Furthermore, in said actuated position, the first opposite sides of the end portions of the first lever arm 22a and the second lever arm 22b are oriented in parallel to the first plate 24 and the second plate 26.

Moreover, in said actuated position S4 of the first lever arm 22a and the second lever arm 22b, the respective end portions of said lever arms 22a, 22b are adapted to move the first plate 24 in an axial direction, thereby exerting an axial force F on the expansion member 18 causing the expansion member 18 to expand in a radial direction due to being compressed in its axial direction since it is held between the first plate and the ring-shaped element 28.

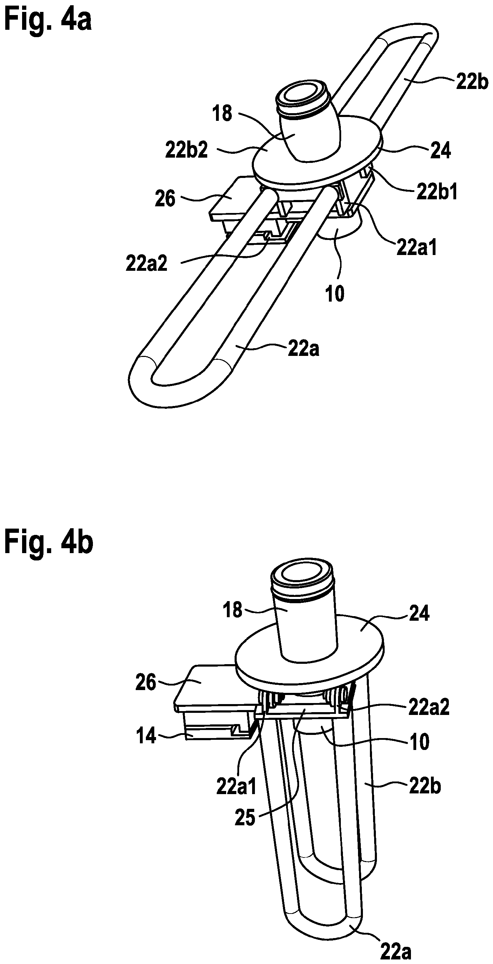

Fig. 4a shows a schematic view of the sensor unit in an actuated position according to the preferred embodiment of the invention.

In the depiction of Fig. 4a, the U-shape of the first lever arm 22a and the second lever arm 22b is shown.

This construction advantageously enables easier gripping of the lever arms by a user while at the same time exerting a uniform force on the second plate 26 due to the fact that each lever arm 22a, 22b has two end portions 22a1, 22a2, 22b1, 22b2 that are adapted to exert a force on the first plate 24 and the second plate 26.

Fig. 4b shows a schematic view of the sensor unit in a non-actuated position according to the preferred embodiment of the invention.

In Fig. 4b, a crosslink bar 25 is shown linking the adjacent end portions 22a1, 22a2 of the first lever arm 22a together, thus advantageously providing an enhanced stability of the first lever arm 22a. The second lever arm 22b is constructed in an analogous fashion.

Although the aforementioned sensor unit has been described in connection with formwork walls of a lost formwork structure, a person skilled in the art is aware of the fact that the herein described sensor unit can of course be applied in other structures in which a lateral pressure of a medium against a constraining structure is to be measured.

Although specific embodiments have been illustrated and described herein, it will be appreciated by those of ordinary skill in the art that a variety of alternate and/or equivalent implementations exist.

It should be appreciated that the exemplary embodiment or exemplary embodiments are only examples, and are limited by the appended claims.

Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims

### Reference List

- 1: sensor unit
- 2: opening
- 3: formwork wall
- 4: lost formwork
- 5: formwork wall
- 10: pressure chamber
- 12: pressure transducer
- 14: control unit
- 16: arrangement
- 18: expansion member
- 20: actuating device
- 22a: first lever arm
- 22b: second lever arm
- 22a1, 22a2, 22b1, 22b2: end portions
- 22c, 22d: opposite sides
- 22e, 22f: opposite sides
- 24: first plate
- 25: crosslinkage bar
- 26: second plate
- 28: ring-shaped element
- 28a: first axial position
- 28b: second axial position
- 30: collar
- 32: sealing ring
- 34: membrane
- 36: nose ring
- 38a, 38b: screws
- 40a, 40b: spacer elements
- 42: ring flange
- 46: reinforcement rods
- A: longitudinal axis
- D1: first diameter
- D2: second diameter
- F: force
- L1: first length
- L2: second length
- M: building material
- P: lateral pressure
- S1: actuated state
- S2: non-actuated state
- S3: non-actuated position
- S4: actuated position

## Claims

1. Sensor unit (1) insertable into an opening (2) of a formwork wall (3) of a lost formwork (4) for building material (M) construction, said sensor unit (1) being configured to measure a lateral pressure (P) exerted on formwork walls (3, 5) by building material (M) filled into a space enclosed by the formwork walls (3, 5), comprising a pressure chamber (10); a pressure transducer (12) connected to the pressure chamber (10); a control unit (14) configured to control the pressure transducer (12); and an arrangement (16) for fastening and releasing the sensor unit (1) in the opening (2) of the formwork wall (3), comprising an expansion member (18) and an actuating device (20) adapted to actuate the expansion member (18), wherein the expansion member (18), in an actuated state (S1), is adapted to fasten the sensor unit (1) in the opening (2) of the formwork wall (3), and wherein the expansion member (18) in a non-actuated state (S2) is adapted to release the sensor unit (1) from its fastening in the opening (2) of the formwork wall (3), the sensor unit being **characterized in that**,
the expansion member (18) is formed by a substantially cylindrical rubber element fitted around the substantially cylindrical pressure chamber (10) and **in that** the actuating device (20) comprises at least one lever arm (22a,22b), and end portion (22a1,22a2,22b1,22b2) of which is pivot mounted to a first plate (24), wherein the end portion has a substantially rectangular shape with first opposite sides (22c, 22d) having a first length (L1) and second opposite sides (22e, 22f) having a second length (L2) greater that the first length (L1), wherein in an actuated position (S4) of the at least one lever arm (22a, 22b), the end portion (22a1, 22a2, 22b1, 22b2) of the actuating device (20) is adapted to move the first plate (24) in an axial direction, thereby exerting an axial force (F) on the expansion member (18) causing the expansion member (18) to expand in a radial direction.

2. The sensor unit of claim 1, wherein the actuating device (20) further comprises a second plate (26), said second plate (26) having an opening (26a) through which the pressure chamber (10) extends, wherein the second plate (26) forms a support surface for the end portion (22a1, 22a2, 22b1, 22b2) of the at least one lever arm (22a, 22b).

3. The sensor unit of claim 1 or 2, wherein the at least one lever arm (22a, 22b), in the non-actuated position (S3), is oriented substantially in parallel to a longitudinal axis (A) of the pressure chamber (10), and in the actuated position (S4), is oriented substantially perpendicular to the longitudinal axis (A) of the pressure chamber (10).

4. The sensor unit of claim 3, wherein in the non-actuated position, the second opposite sides (22e, 22f) of the end portion (22a1, 22a2, 22b1, 22b2) of the at least one lever arm (22a, 22b) are oriented in parallel to the first plate (24) and the second plate (26), and wherein in the actuated position, the first opposite sides (22c, 22d) of the end portion (22a1, 22a2, 22b1, 22b2) of the at least one lever arm (22a, 22b) are oriented in parallel to the first plate (24) and the second plate (26).

5. The sensor unit of any one of claims 2 to 4, wherein the expansion member (18) is arranged between the second plate (26) and a ring-shaped element (28) having, at least in portions, an equal diameter than the expansion member (18).

6. The sensor unit of any one of claims 1 to 5, wherein at least some of the sides of the end portion (22a1, 22a2, 22b1, 22b2) of the at least one lever arm (22a, 22b) have rounded edges, and wherein the first plate (24) has an opening (24a) through which the pressure chamber (10) extends.

7. The sensor unit of any one of the preceding claims, wherein the actuating device (20) comprises a first lever arm (22a) and a second lever arm (22b) that are arranged opposite to each other, wherein each lever arm (22a, 22b) has a U-shape having two end portions (22a1, 22a2, 22b1, 22b2) pivot mounted to the first plate (24), wherein the end portions (22a1, 22a2, 22b1, 22b2) have a substantially rectangular shape with first opposite sides (22c, 22d) having a first length (L1) and second opposite sides (22e, 22f) having a second length (L2) greater than the first length.

8. The sensor unit of any one of claims 1 to 7, further comprising a bushing (30) inserted between the pressure chamber (10) and the expansion member (18), and wherein the ring-shaped element (28) has a stepped shape comprising a first axial portion (28a) arranged adjacent to the expansion element having a first diameter (D1) and a second axial portion (28b) having a second diameter (D2) less than the first diameter (D1), wherein a sealing ring (32) is arranged at a collar (30) of the ring-shaped element (28).

9. The sensor unit of claim 8, further comprising a membrane (34) arranged adjacent to the ring-shaped element (28), and wherein a nose ring (36) fastens the membrane (34) to the ring-shaped element (28) by means of a threaded connection.

10. The sensor unit of any one of the preceding claims, wherein the control unit (14) is fixed to the second plate (26) by a pair of screws (38a, 38b), wherein each screw is guided through a hollow spacer element (40a, 40b) arranged between a wing flange (42) of the control unit (14) and the second plate (26).

11. Lost formwork for concrete construction comprising a first formwork wall (3) and a second formwork wall (5) aligned in parallel and connected to each other by a plurality of reinforcement rods (46); and at least one sensor unit (1) of any one of claims 1 to 10 configured to acquire data in relation to a lateral pressure (P) exerted on the formwork walls (3) by building material (M) being filled in a space enclosed by the formwork walls (3).

## Patentansprüche

1. Sensoreinheit (1), die in eine Öffnung (2) einer Schalungswand (3) einer verlorenen Schalung (4) für Baumaterial (M) einsetzbar ist, wobei die besagte Sensoreinheit (1) eingerichtet ist, einen seitlichen Druck (P) zu messen, der auf Schalungswände (3, 5) durch Baumaterial (M) ausgeübt ist, das in einen von den Schalungswänden (3, 5) umschlossenen Raum gefüllt ist, umfassend eine Druckkammer (10); einem Druckwandler (12), der mit der Druckkammer (10) verbunden ist; eine Steuerungseinheit (14), die eingerichtet ist, den Druckwandler (12) zu steuern; und eine Anordnung (16) zum Befestigen und Lösen der Sensoreinheit (1) in der Öffnung (2) der Schalungswand (16) zum Befestigen der Schalungswand (3), umfassend ein Ausdehnungselement (18) und eine Betätigungsvorrichtung (20), die angepasst ist, das Ausdehnungselement (18) zu betätigen, wobei das Ausdehnungselement (18) in einem betätigten Zustand (S1) angepasst ist, die Sensoreinheit (1) in der Öffnung (2) der Schalungswand (3) zu befestigen und wobei das Ausdehnungselement (18) in einem nicht betätigten Zustand (S2) angepasst ist, die Sensoreinheit (1) aus ihrer Befestigung in der Öffnung (2) der Schalungswand (3) zu lösen, wobei die Sensoreinheit **dadurch gekennzeichnet ist, dass** das Ausdehnungselement (18) durch ein im Wesentlichen zylindrisches Gummielement gebildet ist, das um die im Wesentlichen zylindrische Druckkammer (10) angepasst ist, und dass die Betätigungsvorrichtung (20) zumindest einen Hebelarm (22a, 22b) umfasst, dessen Endabschnitt (22a1, 22a2, 22b1, 22b2) an einer Platte (24) in einer axialen Richtung schwenkbar angebracht ist, wodurch eine axiale Kraft (F) auf das Ausdehnungselement (18) ausgeübt ist, die bewirkt, dass sich das Ausdehnungselement (18) in einer radialen Richtung ausdehnt.

2. Die Sensoreinheit nach Anspruch 1, wobei die Betätigungsvorrichtung (20) ferner eine zweite Platte (26) umfasst, wobei die besagte zweite Platte (26) eine Öffnung (26a) aufweist, durch die sich die Druckkammer (10) erstreckt, wobei die zweite Platte (26) eine Stützoberfläche für den Endabschnitt (22a1, 22a2, 22b1, 22b2) des zumindest einen Hebelarms (22a, 22b) bildet.

3. Die Sensoreinheit nach Anspruch 1 oder 2, wobei der zumindest eine Hebelarm der zumindest ein Hebelarm (22a, 22b) in der nicht bestätigten Position (S3) im Wesentlichen parallel zu einer Längsachse (A) der Druckkammer (10) ausgerichtet ist, und in der betätigten Stellung (S4) im Wesentlichen senkrecht zu der Längsachse (A) der Druckkammer (10) ausgerichtet ist.

4. Die Sensoreinheit nach Anspruch 3, wobei in der nicht betätigten Stellung Position die zweiten gegenüberliegenden Seiten (22e, 22f) des Endabschnitts (22a1, 22a2, 22b1, 22b2) des zumindest einen Hebelarms (22a, 22b) parallel zu der ersten Platte (24) und der zweiten Platte (26) ausgerichtet sind, und wobei in der betätigten Position die ersten gegenüberliegenden Seiten (22c, 22d) des Endabschnitts (22a1, 22a2, 22b1) des zumindest einen Hebelarms (22a, 22b) parallel zu der ersten Platte (24) und der zweiten Platte (26) ausgerichtet sind

5. Die Sensoreinheit nach irgendeinem der Ansprüche 2 bis 4, wobei das Ausdehnungselement (18) zwischen der zweiten Platte (26) und einem ringförmigen Element (28) angeordnet ist, das zumindest abschnittsweise einen gleichen Durchmesser wie das Ausdehnungselement (18) aufweist.

6. Die Sensoreinheit nach irgendeinem der Ansprüche 1 bis 5, wobei zumindest einige der Seiten des Endabschnitts (22a1, 22a2, 22b1, 22b2) des zumindest eines Hebelarms (22a, 22b) abgerundete Kanten aufweisen, und wobei die erste Platte (24) eine Öffnung (24a) aufweist, durch die sich die Druckkammer (10) erstreckt.

7. Die Sensoreinheit nach irgendeinem der vorhergehenden Ansprüche, wobei die Betätigungseinrichtung (20) einen ersten Hebelarm (22a) und einen zweiten Hebelarm (22b) umfasst, die einander gegenüberliegend angeordnet sind, wobei jeder Hebelarm (22a, 22b) eine U-Form mit zwei Endabschnitten (22a1, 22a2, 22b1, 22b2) aufweist, die schwenkbar an der ersten Platte (24) angebracht sind, wobei die Endabschnitte (22a1, 22a2, 22b1, 22b2) eine im Wesentlichen rechteckige Form mit ersten gegenüberliegenden Seiten (22c, 22d) mit einer ersten Länge (L1) und zweiten gegenüberliegenden Seiten (22e, 22f) mit einer zweiten Länge (L2) aufweisen, die größer ist als die erste Länge.

8. Die Sensoreinheit nach irgendeinem der Ansprüche 1 bis 7, ferner umfassend eine Buchse (30), die zwischen der Druckkammer (10) und dem Ausdehnungselement (18) eingesetzt ist, und wobei das ringförmige Element (28) eine abgestufte Form aufweist, das einen ersten axialen Abschnitt (28a), der benachbart zu dem Ausdehnungselement angeordnet ist und einen ersten Durchmesser (D1) aufweist, und einen zweiten axialen Abschnitt (28b) umfasst, der einen zweiten Durchmesser (D2) aufweist, der kleiner als der erste Durchmesser (D1) ist, wobei ein Dichtungsring (32) an einem Kragen (30) des ringförmigen Elementes (28) angeordnet ist.

9. Die Sensoreinheit nach Anspruch 8, ferner umfassend eine Membran (34), die benachbart zu dem ringförmigen Element (28) angeordnet ist, und wobei ein Nasenring (36) die Membran (34) an dem ringförmigen Element (28) mit Hilfe einer Gewindeverbindung befestigt.

10. Die Sensoreinheit nach irgendeinem der vorhergehenden Ansprüche, wobei die Steuerungseinheit (14) an der zweiten Platte (26) durch ein Paar von Schrauben (38a, 38b) befestigt ist, wobei jede Schraube durch ein hohles Abstandselement (40a, 40b) geführt ist, das zwischen einem Flügelflansch (42) der Steuerungseinheit (14) und der zweiten Platte (26) angeordnet ist.

11. Verlorene Schalung für Betonbau umfassend eine erste Schalungswand (3) und eine zweite Schalungswand (5), die parallel zueinander angeordnet und durch eine Vielzahl an Bewehrungsstäben (46) miteinander verbunden sind; und zumindest eine Sensoreinheit (1) nach irgendeinem der Ansprüche 1 bis 10, die eingerichtet ist, Daten in Bezug auf einen seitlichen Druck (P) zu erfassen, der auf die Schalungswände (3) durch Baumaterial (M) ausgeübt ist, das in einen von den Schalungswänden (3) umschlossenen Raum gefüllt ist.

## Revendications

1. Unité de capteur (1) pouvant être insérée dans une ouverture (2) d'une paroi de coffrage (3) d'un coffrage perdu (4) pour la construction en matériau de construction (M), ladite unité de capteur (1) étant configurée pour mesurer une pression latérale (P) exercée sur les parois de coffrage (3, 5) par le matériau de construction (M) rempli dans un espace délimité par les parois de coffrage (3, 5), comprenant une chambre de pression (10) ; un transducteur de pression (12) relié à la chambre de pression (10) ; une unité de commande (14) configurée pour commander le transducteur de pression (12) ; et un agencement (16) pour fixer et libérer l'unité de capteur (1) dans l'ouverture (2) de la paroi de coffrage (3), comprenant un élément d'expansion (18) et un dispositif d'actionnement (20) adapté à actionner l'élément d'expansion (18),
dans laquelle l'élément d'expansion (18), dans un état actionné (S1), est adapté à fixer l'unité de capteur (1) dans l'ouverture (2) de la paroi de coffrage (3), et dans laquelle l'élément d'expansion (18), dans un état non actionné (S2), est adapté à libérer l'unité de capteur (1) de sa fixation dans l'ouverture (2) de la paroi de coffrage (3), l'unité de capteur étant **caractérisée en ce que**
l'élément d'expansion (18) est formé par un élément en caoutchouc sensiblement cylindrique ajusté autour de la chambre de pression sensiblement cylindrique (10) et **en ce que** le dispositif d'actionnement (20) comprend au moins un bras de levier (22a, 22b) dont une partie d'extrémité (22a1, 22a2, 22b1, 22b2) est montée pivotante sur une première plaque (24), dans laquelle la partie d'extrémité a une forme sensiblement rectangulaire avec des premiers côtés opposés (22c, 22d) ayant une première longueur (L1) et des seconds côtés opposés (22e, 22f) ayant une seconde longueur (L2) supérieure à la première longueur (L1),
dans laquelle, dans une position actionnée (S4) dudit au moins un bras de levier (22a, 22b), la partie d'extrémité (22a1, 22a2, 22b1, 22b2) du dispositif d'actionnement (20) est adaptée à déplacer la première plaque (24) dans une direction axiale, exerçant ainsi sur l'élément d'expansion (18) une force axiale (F) provoquant l'expansion de l'élément d'expansion (18) dans une direction radiale.

2. Unité de capteur selon la revendication 1, dans laquelle le dispositif d'actionnement (20) comprend en outre une seconde plaque (26), ladite seconde plaque (26) ayant une ouverture (26a) à travers laquelle la chambre de pression (10) s'étend, dans laquelle la seconde plaque (26) forme une surface de support pour la partie d'extrémité (22a1, 22a2, 22b1, 22b2) dudit au moins un bras de levier (22a, 22b).

3. Unité de capteur selon la revendication 1 ou 2, dans laquelle ledit au moins un bras de levier (22a, 22b), dans la position non actionnée (S3), est orienté sensiblement parallèlement à un axe longitudinal (A) de la chambre de pression (10) et, dans la position actionnée (S4), est orienté sensiblement perpendiculairement à l'axe longitudinal (A) de la chambre de pression (10).

4. Unité de capteur selon la revendication 3, dans laquelle, dans la position non actionnée, les seconds côtés opposés (22e, 22f) de la partie d'extrémité (22a1, 22a2, 22b1, 22b2) dudit au moins un bras de levier (22a, 22b) sont orientés parallèlement à la première plaque (24) et à la seconde plaque (26), et dans laquelle, dans la position actionnée, les premiers côtés opposés (22c, 22d) de la partie d'extrémité (22a1, 22a2, 22b1, 22b2) dudit au moins un bras de levier (22a, 22b) sont orientés parallèlement à la première plaque (24) et à la seconde plaque (26).

5. Unité de capteur selon l'une quelconque des revendications 2 à 4, dans laquelle l'élément d'expansion (18) est agencé entre la seconde plaque (26) et un élément en forme d'anneau (28) ayant, au moins sur certaines parties, un diamètre égal à celui de l'élément d'expansion (18).

6. Unité de capteur selon l'une quelconque des revendications 1 à 5, dans laquelle au moins certains des côtés de la partie d'extrémité (22a1, 22a2, 22b1, 22b2) dudit au moins un bras de levier (22a, 22b) ont des bords arrondis, et dans laquelle la première plaque (24) a une ouverture (24a) à travers laquelle la chambre de pression (10) s'étend.

7. Unité de capteur selon l'une quelconque des revendications précédentes, dans laquelle le dispositif d'actionnement (20) comprend un premier bras de levier (22a) et un second bras de levier (22b) qui sont agencés à l'opposé l'un de l'autre, dans laquelle chaque bras de levier (22a, 22b) a une forme en U ayant deux parties d'extrémité (22a1, 22a2, 22b1, 22b2) montées pivotantes sur la première plaque (24), dans laquelle les parties d'extrémité (22a1, 22a2, 22b1, 22b2) ont une forme sensiblement rectangulaire avec des premiers côtés opposés (22c, 22d) ayant une première longueur (L1) et des seconds côtés opposés (22e, 22f) ayant une seconde longueur (L2) supérieure à la première longueur.

8. Unité de capteur selon l'une quelconque des revendications 1 à 7, comprenant en outre une douille (30) insérée entre la chambre de pression (10) et l'élément d'expansion (18), et dans laquelle l'élément en forme d'anneau (28) a une forme étagée comprenant une première partie axiale (28a) agencée de manière adjacente à l'élément d'expansion ayant un premier diamètre (D1) et une seconde partie axiale (28b) ayant un second diamètre (D2) inférieur au premier diamètre (D1), dans laquelle une bague d'étanchéité (32) est agencée au niveau d'un collet (30) de l'élément en forme d'anneau (28).

9. Unité de capteur selon la revendication 8, comprenant en outre une membrane (34) agencée de manière adjacente à l'élément en forme d'anneau (28), et dans laquelle une bague à nez (36) fixe la membrane (34) à l'élément en forme d'anneau (28) au moyen d'une liaison filetée.

10. Unité de capteur selon l'une quelconque des revendications précédentes, dans laquelle l'unité de commande (14) est fixée à la seconde plaque (26) par une paire de vis (38a, 38b), chaque vis étant guidée à travers un élément d'écartement creux (40a, 40b) agencé entre une bride à aile (42) de l'unité de commande (14) et la seconde plaque (26).

11. Coffrage perdu pour la construction en béton comprenant une première paroi de coffrage (3) et une seconde paroi de coffrage (5) alignées en parallèle et reliées l'une à l'autre par une pluralité de tiges d'armature (46) ; et au moins une unité de capteur (1) selon l'une quelconque des revendications 1 à 10 configurée pour acquérir des données en relation avec une pression latérale (P) exercée sur les parois de coffrage (3) par un matériau de construction (M) rempli dans un espace délimité par les parois de coffrage (3).
